# FASCICULE DE BREVET EUROPEEN

(11) **EP 3 254 028 B1**
(45) Date de publication et mention de la délivrance du brevet: **05.12.2018**
(21) Numéro de dépôt: 16701792.0
(22) Date de dépôt: 28.01.2016
(51) Int. Cl.: F23D 14/66, F23L 15/04, F23R 3/00, F23R 3/14, F23R 3/44, F23R 3/54, F23R 3/58, F02C 7/08, F02C 3/04, F02C 3/14

(54) **APPAREIL DE COGÉNÉRATION D'ÉNERGIE COMPRENANT UNE MICROTURBINE À GAZ ALIMENTÉE PAR UNE CHAMBRE DE COMBUSTION MULTI-VORTEX AVEC DES ÉCHANGEURS DE CHALEUR**
KWK-STROMERZEUGUNG MIT EINER DURCH EINE MULTIVORTEX-BRENNKAMMER MIT WÄRMETAUSCHERN VERSORGTEN GASMIKROTURBINE
POWER CO-GENERATION APPARATUS INCLUDING A GAS MICROTURBINE SUPPLIED BY A MULTI-VORTEX COMBUSTION CHAMBER WITH HEAT EXCHANGERS

(30) Priorité: 03.02.2015 BE 201505054
(43) Date de publication de la demande: 13.12.2017
(73) Titulaire: Mitis S.A., 4280 Hannut (BE); Universite Libre de Bruxelles, 1050 Bruxelles (BE)
(72) Inventeur: DELANAYE, Michel, 4280 Hannut (BE); PARENTE, Alessandro, 1000 Bruxelles (BE); NACEREDDINE, Rabia, 4000 Liège (BE)
(74) Mandataire: Pronovem
(86) Numéro de dépôt international: PCT/EP2016/051762
(87) Numéro de publication internationale: WO 2016/124472

(56) Documents cités:
- WO-A1-2012/112514
- US-A- 3 831 374

## Description

### Objet de l'invention

La présente invention se rapporte à un appareillage de cogénération d'énergie (chaleur-électricité) se distinguant par une chambre de combustion couplée à un récupérateur de chaleur et intégrée avec une micro-turbine à gaz fonctionnant au gaz nature.

### Etat de la technique

Il est connu que la combustion ou oxydation sans flamme (ou en jargon « flameless ») est une technique de combustion propre qui a été développée pour améliorer les brûleurs à haut rendement avec préchauffage de l'air à haute température qui généraient des émissions importantes de NOx.

Dans les systèmes à oxydation sans flamme, les injections en air (comburant) et en gaz (combustible) sont réalisées séparément et à haute vitesse. Cette technique est également basée sur le principe de la mise en contact des réactifs préchauffés à une température au-delà de leur limite d'inflammabilité avec entraînement au sein de la zone de réaction de suffisamment de gaz de combustion pour diluer la flamme. En conséquence, le champ de température apparaît plus uniforme sans points se trouvant à température très élevée. Le taux d'oxygène au niveau de la combustion diminue et la formation de NOx par voie thermique est ainsi très réduite voire supprimée, produisant une combustion très faiblement polluante.

Le mécanisme fondamental de la combustion sans flamme provient de la corrélation forte entre la turbulence et les réactions chimiques. La turbulence élevée due aux vitesses d'air importantes favorise la réduction des temps de mélange. Par ailleurs la dilution des réactifs augmente les temps des réactions chimiques

La combustion « flameless » est souvent mise en oeuvre par la recirculation des gaz de combustion qui pompe de l'énergie dans la zone de combustion et en abaisse la température : il s'agit du principe du brûleur FLOX® - *Flameless oxidation.*

Pour l'application de microturbine à gaz à cycle récupéré selon la présente invention, on peut profiter d'un récupérateur de chaleur permettant de préchauffer l'air en prélevant l'énergie encore présente dans les gaz de combustion détendus par la turbine afin de porter la température de cet air préchauffé au-delà de 800°C, et mettre ainsi en place les conditions favorables à une combustion sans flamme. Il s'agit néanmoins de trouver la configuration la plus simple pour connecter et assembler le système compresseur-récupérateur-chambre de combustion-turbine.

Plusieurs formes de chambre de combustion adaptées au régime flameless sont connues dans l'état de l'art. Elles sont principalement basées sur la recirculation de gaz de combustion. La solution d'une recirculation des gaz est difficile à mettre en oeuvre car elle demande en général l'introduction du gaz combustible et comburant du même côté que la sortie des gaz de combustion, ce qui a pour conséquence un enchevêtrement de conduits d'admission de gaz et d'air et d'extraction des gaz brûlés, difficile à mettre en oeuvre dans le cadre d'une intégration d'une chambre avec une turbine.

Les documents ci-après donnent un aperçu de l'état de la technique, d'une part dans le domaine des récupérateurs de chaleur et d'autre part dans celui des chambres de combustion (multi-)vortex et flameless.

### Récupérateur de chaleur

Le document WO 02/063231 A1 présente une configuration d'échangeur de chaleur en spirale qui incorpore un treillis métallique tissé en guise de séparateur entre les parois des zones de fluides.

Le document WO 2013/124054 A1 se rapporte à une configuration annulaire de récupérateur de gaz pour turbine comprenant un treillis intérieur dans les zones de passage du fluide.

Dans le document WO 2012/141793 A1, on utilise un échangeur avec une structure de treillis métallique tissé formant une structure d'ailettes pour accroître le transfert de chaleur.

Le document WO 2011/137522 A1 présente une technique pour créer un composant d'échangeur de chaleur utilisant un treillis pris en sandwich entre deux faces et fermé sur les côtés par un dépôt de métal, cette structure définissant un chemin de passage pour le fluide échangeur.

Le document EP 1 733 822 B1 présente un élément d'écartement rigide moulé d'une pièce comportant des couches de métal à structure ouverte écartées par des entretoises métalliques en forme de fil, pour un échangeur de chaleur.

Le document NL 1027640 C2 propose l'idée d'un treillis métallique comme séparateur entre plaques dans un échangeur de chaleur mais sans mentionner les éléments de fermeture extérieurs permettant d'assurer une étanchéité.

Dans le document WO 2005/098338 A1, on décrit une structure d'échangeur de chaleur utilisant un matériau poreux.

Le document WO 2005/019754 A1 divulgue l'idée d'introduire des séparateurs afin de séparer les plaques d'échangeur et créer des canaux de passage pour le fluide échangeur, les séparateurs étant créés sous forme d'une déformation des plaques elles-mêmes.

Le document WO 91/02209 A1 fait mention d'un maillage de séparation entre faces d'un échangeur, le maillage et les faces étant réalisés en matière thermoplastique (polyamide).

Le document US 4,843,693 A présente un treillis métallique ondulé soudé à une plaque métallique de montage, jouant le rôle de conducteur de chaleur dans un extracteur de chaleur (heat sink).

Le document JP 57-187594 A divulgue l'introduction d'un maillage métallique sur une plaque pour accroître le taux de turbulence et l'échange de chaleur dans le cas de liquides.

Le document FR 1 519 235 décrit également un empilement de plaques et grilles de renforcement entre les plaques, ces dernières servant de support et provoquant la turbulence dans le fluide.

Le document FR 1 246 571 propose une cellule d'échange de chaleur comportant deux plaques métalliques séparées par une toile métallique plissée et ondulée à grande surface permettant d'améliorer l'échange de chaleur entre deux fluides circulant respectivement entre les plaques et en dehors de celles-ci.

### Chambre de combustion

Le document WO 2012/112514 A1 divulgue un appareil de cogénération d'énergie comprenant une micro-turbine ayant une chambre de combustion cylindrique du type « à vortex », et au moins un récupérateur-échangeur de chaleur.

Le document US 3 831 374 A montre une turbine à gaz ayant un échangeur de chaleur et une sortie annulaire de gaz de combustion.

Le document CN 103032891 A introduit l'utilisation d'une combustion multi-vortex avec plusieurs dispositifs de mise en rotation de l'air mais qui ne correspond pas à une combustion flameless.

Le document WO 2010/128964 A1 décrit la technique de « trapped vortex » qui est une technique alternative à la combustion flameless, permettant aussi une réduction de la production de NOx. Il en est de même de US 7,003,961 B2.

Le document EP 1 010 945 B1 concerne une chambre de combustion avec des injections de carburant liquide.

Dans le document WO 01/11215 A1, on décrit la création d'une zone d'oxydation sans flamme par recirculation de l'air et mélange avec des fumées. La zone produisant l'écoulement giratoire a un axe perpendiculaire à l'écoulement.

Dans US 3,810,732 A, on utilise une paroi cintrée perforée de la chambre de mélange pour réaliser le mélange et une combustion sans flamme.

Le document EP 0 717 237 B1 décrit une utilisation du concept de recirculation des gaz de combustion dans un processus de combustion de gaz industriel, les gaz de combustion du fuel servent à oxyder le gaz industriel sans flamme.

Le document EP 2 620 704 A1 passe en revue les techniques permettant la réduction de NOx dans les turbines à gaz : « stagnation point reverse flow combustors » (SPRFC), « flameless oxidation combustors » (FLOXCOM) et « advanced vortex combustors » (AVC). La technologie proposée dans ce document utilise quant à elle des micro-injecteurs pour assurer un fort mélange fuel-gaz oxydant.

Dans WO 2013/029977 A1, on décrit un mécanisme de combustion sans flamme par recirculation. La chambre de combustion est dite à parois « froides » car la température n'excède pas 1000 K. L'injection d'air et de gaz se fait du même côté et une forte recirculation a lieu. Une des problématiques relatives à cette technologie concerne le positionnement des sorties et la complexité de l'enchevêtrement des injecteurs d'air/de gaz et des sorties.

Le document CN 101625130 A mentionne une chambre de combustion flameless pour une turbine à gaz formée d'un ensemble d'injecteurs coaxiaux répartis selon une configuration cylindrique.

Les documents WO 2009/121776 A1, WO 2009/121777 A1, WO 2009/121778 A1, WO 2009/121779 A1, WO 2009/121780 A1, WO 2009/121781 A1 et WO 2009/121790 A1 sont apparentés au design de brûleurs à pré-mélange maigre ou pauvre ("lean-premixed burner") et décrivent des problématiques de stabilité des combustions à prémélange pauvre (« lean premixed combustions »).

Dans WO 2013/066432 A1 et WO 2013/066433 A1, on a la description d'un système de microturbine à gaz récupéré fonctionnant avec une combustion en mode flameless. Ici il n'y a pas de chambre de combustion mais une chambre de réaction contenant une céramique poreuse portée à haute température afin de permettre l'autoallumage du mélange.

Le document EP 1 048 901 A1 décrit le principe FLOX® mis au point par la société WS et qui est basé sur le principe de la recirculation des gaz de combustion qui pompe de l'énergie dans la zone de combustion et en abaisse la température

Dans WO 2010/081578 A1 et WO 2009/115532 A2, on décrit un principe de chambre de combustion avec recirculation similaire à FLOX®.

Dans WO 2007/115989 A1, un pré-mélange pauvre (« lean premixing ») fuel/air est réalisé à partir d'un tourbillon initial engendré par une introduction dans la chambre de combustion par des orifices inclinés selon un certain angle. Le fuel liquide est injecté dans chaque passage, l'objectif étant une mise en rotation de l'écoulement pour obtenir un pré-mélange.

Le document WO 03/091626 A1 divulgue une autre configuration permettant la recirculation des gaz et le mode flameless.

Les brevets US 3,309,866 A décrit une configuration similaire à celle du document précédent. WO 2005/75887 décrit une combustion annulaire avec rotation rapide des gaz.

Le document WO 2005/040677 A2 met aussi en avant le principe recirculation des gaz de combustion, style FLOX®.

Dans US 7,127,897 B2 (ou US 7,237,385 B2, ou US 7,318,317 B2), on décrit une combustion utilisant le principe d'un vortex dans une chambre toroïdale.

EP 0 113 695 A2 décrit un combusteur-mélangeur à vortex pour le mélange de carburant et d'air. Dans US 8,695,350 B2 est divulgué le principe de la combustion CDC (Colorless distributed combustion), et de la technique de recirculation ou « flameless ».

Dans les documents WO 2013/28169 A1, WO 2013/028167 A2 et WO 2013/028164 A2, on décrit le principe basé sur une injection tangentielle d'un mélange air-fuel (c'est-à-dire un pré-mélange), chaque canule étant en fait un injecteur, les injecteurs interagissant les uns avec les autres pour améliorer le mélange, l'ensemble des injecteurs injectant leur mélange dans une chambre de combustion annulaire.

Le document US 5,479,781 A divulgue une injection directe pauvre tant de fuel que d'air dans une chambre de combustion, via des injecteurs tangentiels pour produire une mise en rotation dans le même sens de l'air et du fuel. La combustion a lieu au centre de la chambre.

Dans US 3,012,402 A, la chambre de combustion est en forme de spirale.

Dans le document EP 0 387 532 B1, la chambre de combustion comporte un certain nombre de brûleurs individuels comportant un gicleur à combustible situé dans un espace intérieur conique creux et des fentes d'entrée d'air tangentielles opposées par rapport à l'écoulement à la périphérie du cône. D'autres gicleurs à combustible sont disposés dans la région des fentes d'entrée d'air tangentielles.

On voit que l'état de la technique cité ci-dessus ne résout pas le problème de la mise au point d'une chambre de combustion qui offre un régime stable de combustion flameless, intégrée avec une microturbine à gaz.

### Buts de l'invention

Le but de la présente invention est de fournir une chambre de combustion et un récupérateur de chaleur pour une micro-turbine à gaz de petite taille destinée à produire de l'électricité et de la chaleur dans un mode de cogénération et présentant un rendement électrique égal ou supérieur à 30%.

Un autre but de l'invention est de mettre en place les conditions favorables à une combustion sans flamme en trouvant la configuration la plus simple pour connecter et assembler un dispositif comprenant successivement un compresseur, un récupérateur-échangeur de chaleur, une chambre de combustion et une turbine.

### Principaux éléments caractéristiques de l'invention

La présente invention se rapporte à un appareil de cogénération d'énergie comprenant une microturbine à gaz alimentée par une chambre de combustion du type « à vortex » pour réaliser un régime de combustion du type « flameless » et avec au moins un récupérateur-échangeur de chaleur pour le préchauffage d'air comburant comprimé issu d'un compresseur de la microturbine, avant l'injection de cet air préchauffé dans la chambre de combustion, la chambre de combustion comprenant essentiellement une chambre cylindrique comportant :
- un tube central tel que l'air préchauffé est introduit à une première extrémité de la chambre dans une première zone annulaire située entre la paroi externe de la chambre cylindrique et le tube central ;
- à une seconde extrémité de la chambre, des fentes orientées et des tubes d'injection de gaz combustible au niveau du tube central, lesdites fentes orientées et lesdits tubes d'injection de gaz combustible étant disposés de manière, d'une part, à mettre en rotation rapide l'air préchauffé introduit via celles-ci à l'intérieur du tube central selon un vortex d'écoulement parallèle à l'axe de la chambre de combustion et, d'autre part, à assurer le mélange intime de l'air préchauffé, du gaz combustible et des gaz de combustion à l'intérieur du tube central au niveau d'une zone principale et centrale de combustion ;
- une sortie annulaire pour les gaz de combustion située au niveau du tube central à la première extrémité de la chambre et connectée à un distributeur de la turbine.

Selon des modes d'exécution préférés de l'invention, l'appareil comprend en outre au moins une des caractéristiques suivantes, ou encore une combinaison appropriée de celles-ci :
- les tubes d'injection de gaz combustible au niveau du tube central sont tangentiels à la paroi du tube central ;
- l'air préchauffé est introduit à la première extrémité de la chambre de combustion cylindrique par une pluralité d'orifices de communication équidistants entre le récupérateur et la chambre ;
- l'appareil comporte quatre récupérateurs-échangeurs de forme parallélépipédique disposés sous forme d'une croix, chacun de ceux-ci communiquant avec la chambre de combustion via une partie desdits orifices de communication ;
- les gaz de combustion se trouvant dans le tube central débouchent dans la sortie annulaire par une pluralité de tubes équidistants ;
- chaque récupérateur de chaleur comporte une pluralité de zones de fluide chaudes et froides alternées sur l'épaisseur du récupérateur et dans lesquelles les fluides « chaud » et « froid » respectifs circulent à contre-courant, lesdites zones étant en contact thermique deux à deux via une feuille métallique mince de séparation, l'écoulement de fluide étant dirigé au sein de chaque zone par des collecteurs circulaires. Le fluide « chaud » est défini comme étant le gaz de combustion, détendu par la turbine, qui est récupéré dans l'échangeur et qui se refroidit progressivement alors que le fluide « froid » est défini comme l'air comburant qui va être progressivement réchauffé par passage dans l'échangeur avant d'alimenter la chambre de combustion ;
- l'épaisseur de la feuille métallique mince de séparation est comprise entre 50 et 250 microns ;
- les zones de fluide sont délimitées par des cadres de distribution formés par l'assemblage de zones de collecteurs et de montants latéraux ;
- chaque cadre comporte, sur chacun de deux côtés parallèles du cadre, une zone de collecteurs locaux, ondulée de manière à présenter successivement des orifices ouverts sur la partie creuse du cadre alternant avec des orifices respectifs fermés par de la matière du cadre, de sorte que deux zones de fluide adjacentes soient parcourues par les fluides respectifs « chaud » et « froid » et à contre-courant ;
- chaque zone de collecteurs possède un nombre pair d'entrées-sorties circulaires positionnées de manière alternée selon une direction transverse par rapport à l'écoulement ;
- les zones de collecteurs et les montants latéraux sont munis d'un système d'attaches complémentaires du type encoche, tenon-mortaise ou puzzle permettant l'assemblage du récupérateur ;
- le récupérateur est constitué par l'empilement alterné de cadres de distribution de dessins identiques mais retournés à 180° l'un par rapport au suivant, ou positionnés de sorte que l'un est l'image de l'autre dans un miroir, deux cadres adjacents étant séparés par une feuille métallique pleine mince, chaque feuille pleine mince étant pourvue sur deux côtés parallèles d'orifices fermés correspondant aux orifices précités respectivement ouverts et fermés des cadres de distribution ;
- un treillis métallique est inséré dans chaque cadre de distribution, dont les fils ont un diamètre d'environ la moitié de l'épaisseur de la zone de fluide correspondante ;
- les éléments métalliques du récupérateur sont réalisés dans des aciers à très haute teneur en chrome ou nickel, en alliages spéciaux ou en alliages à base nickel ;
- les cadres de distribution sont soudés aux feuilles de séparation au laser ou par diffusion ;
- chaque feuille de séparation est soudée sur un cadre de distribution inférieur, une soudure circulaire étant réalisée au niveau de chaque orifice fermé de la feuille de séparation, selon un épaulement créé par l'ondulation correspondante du cadre de distribution, lorsque le cadre de distribution est superposé à la feuille de séparation ;
- l'ensemble du récupérateur est finalement scellé par l'ajout de plaques inférieure et supérieure de plus forte épaisseur avec soudure sur la tranche du récupérateur.

De préférence, l'appareil de cogénération d'énergie précité est utilisée en manière telle que l'air préchauffé est mis en rotation dans la zone de combustion avec une vitesse de l'ordre de 50 m/s et porté à une température supérieure à 800°C pour produire une auto-combustion sans flamme du gaz combustible.

### Brève description des figures

La figure 1 représente une vue d'ensemble en perspective (avant et arrière) de la chambre de combustion intégrée avec ses quatre récupérateurs de chaleur disposés en croix selon la présente invention.
La figure 2 représente une vue en plan de la chambre de combustion intégrée avec ses récupérateurs de chaleur selon la figure 1.
La figure 3 représente différentes vues détaillées de la chambre de combustion selon la figure 1, à savoir une vue en perspective, une vue de profil ainsi que trois vues en coupe (G-G, I-I et J-J).
Les figures 4A et 4B représentent une vue des entrées d'air et de gaz combustible dans la chambre de combustion selon deux modalités d'exécution de l'invention, respectivement avec des tubes d'injection de gaz tangentiels et avec des tubes d'injection de gaz perpendiculaires à sortie coudée.
Les figures 5A et 5B représentent les résultats de calcul pour l'évolution de température dans une coupe de la chambre de combustion selon les deux formes d'exécution précitées de l'injection de gaz combustible de l'invention, pour un débit nominal.
Les figures 6A et 6B représentent une vue de la section d'empilement de zones chaudes et froides séparées par des feuilles métalliques minces, selon une forme d'exécution préférée de la présente invention.
La figure 7 représente schématiquement le principe de distribution des fluides dans l'échangeur représenté sur les figures 6A et 6B.
La figure 8 est un schéma de configuration d'un assemblage « récupérateur » à un collecteur d'entrée et un collecteur de sortie.
La figure 9 représente le cas particulier d'un échangeur à 5 entrées et 5 sorties.
La figure 10 représente un échangeur complet comme sur la figure 8 fabriqué par soudage par diffusion (diffusion bonding).
Les figures 11A, 11B et 11C représentent respectivement une superposition d'éléments, l'épaulement et une feuille de 100 microns soudée au niveau de l'épaulement.
La figure 12 montre une forme d'exécution avec un soudage laser latéral.
La figure 13 représente le résultat d'un calcul 3D - CHT dans le cas d'un échangeur de 120 zones.
La figure 14 montre l'évolution de l'efficacité thermique en fonction du nombre de zones chaudes (zones froides) pour un échangeur à 5 entrées et 5 sorties (Epaisseur de zone fixée à 1 mm).
La figure 15 montre l'évolution de la perte de charge en fonction du nombre de zones chaudes (zones froides) pour un échangeur à 5 entrées et 5 sorties (Epaisseur de zone fixée à 1 mm).
La figure 16 représente le résultat d'un calcul CHT dans les zones fluides de l'échangeur.
La figure 17 montre l'évolution de l'efficacité thermique en fonction du nombre de zones chaudes (zones froides) pour un échangeur à 5 entrées et 5 sorties (épaisseur de zone fixée à 1 mm) avec étude de l'influence de l'épaisseur de la feuille de séparation.

### Description de formes d'exécution préférées de l'invention

La chambre de combustion selon la présente invention comporte un récupérateur de chaleur permettant de préchauffer l'air comburant avant son introduction dans la zone de combustion. Le dispositif permet l'obtention d'une région de combustion dite « flameless » caractérisé par un très faible taux de production de NOx. Le système fonctionne de préférence sur base de l'utilisation de gaz naturel.

Dans ce but, la présente invention utilise une mise en rotation de l'écoulement d'air préchauffé par le récupérateur avec une injection de gaz tangentielle qui permet un très haut taux de dilution du gaz.

Les nouvelles caractéristiques incorporées dans la présente invention sont les suivantes :

### Chambre de combustion

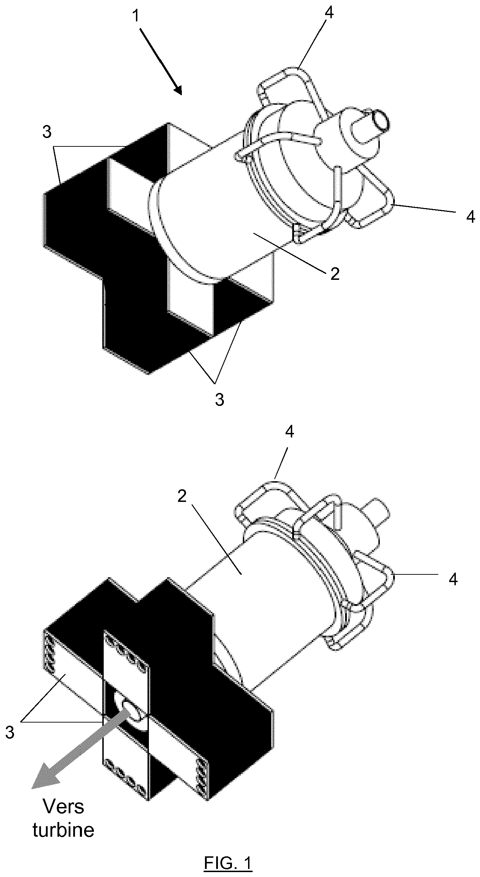

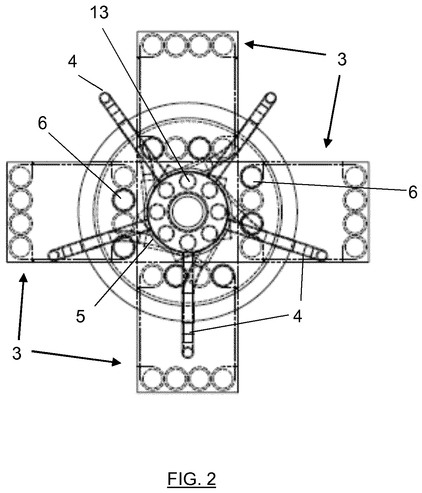

Un mode d'exécution de la présente invention, représenté sur les figures 1 à 3, se rapporte à un appareil de cogénération ayant une chambre de combustion 1 pour micro-turbine à gaz fonctionnant dans un régime de combustion particulier appelé « flameless ». La chambre comprend un brûleur ou zone de combustion proprement dit(e) 2 connecté(e) à un récupérateur de chaleur formé d'un ou plusieurs, de préférence quatre, échangeurs indépendants 3. Ceux-ci préchauffent de l'air comprimé issu d'un compresseur (non représenté) alimenté par la micro-turbine, grâce au prélèvement d'une partie de la chaleur résiduelle se trouvant dans les gaz brûlés de la turbine.

Selon l'invention, il est proposé une chambre de combustion du type « à vortex » dont le principe de fonctionnement est basé sur la mise en rotation rapide de l'air pour créer un vortex dont l'objectif est d'assurer le mélange intime de l'air et du gaz de combustion.

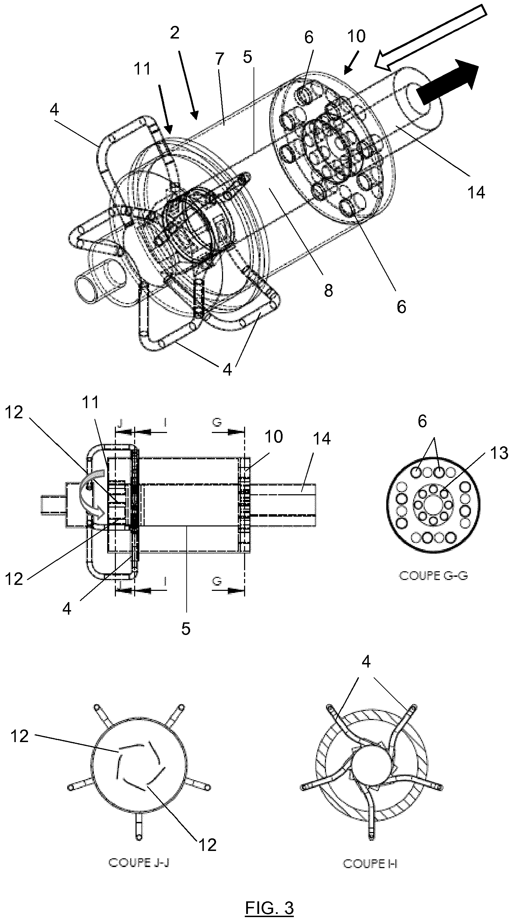

Comme représenté sur la figure 3, l'air préchauffé par le récupérateur entre dans la chambre cylindrique 2 au niveau d'une base 10 de celle-ci (flèche blanche). La chambre 2 comporte un tube central 5 qui délimite une zone annulaire 7 entre le tube 5 et la partie externe de la chambre 2. Sur la figure 3, l'air préchauffé entre dans la zone annulaire 7 par huit trous 6 situés du même côté que l'évacuation des gaz de combustion (flèche noire).

Arrivé à l'autre extrémité 11 de la zone annulaire 7, l'air entre ensuite dans la zone principale et centrale de combustion 8 par une série de fentes orientées, profilées 12 disposées à proximité de l'autre extrémité précitée 11 de la chambre. Avantageusement, ces fentes 12 sont effectivement profilées de telle sorte que l'air soit mis en rotation dans la partie centrale de la chambre 8 avec une vitesse rapide de l'ordre de 50 m/s.

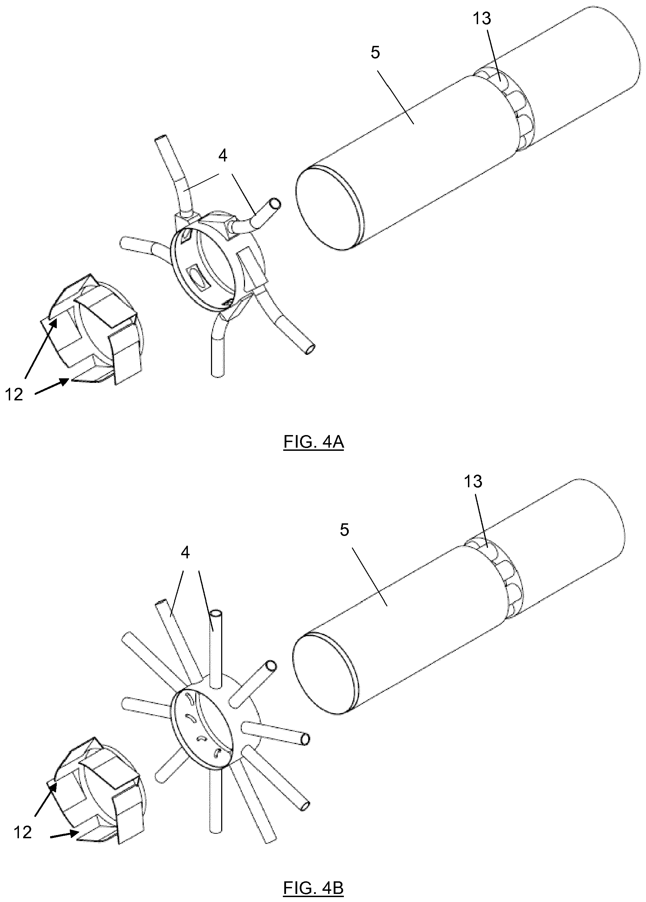

Selon une première forme d'exécution représentée sur la figure 4A, l'injection de gaz combustible est réalisée à une distance définie de l'entrée d'air par l'intermédiaire de tubes ou gicleurs 4 d'injection de gaz disposés tangentiellement par rapport au tube principal 5 de la chambre 2 et débouchant sans dépasser la paroi de ce tube principal 5. La position précise de ces tubes 4 par rapport aux fentes d'entrée d'air 12 est importante. Il faut en effet s'assurer que l'écoulement d'air à l'entrée est bien établi. Ainsi le gaz combustible est aspiré par le flux d'air.

Selon une forme d'exécution alternative représentée sur la figure 4B, l'injection du gaz combustible dans la chambre de combustion 2 est réalisée via 10 tubes 4 à injecteur coudé débouchant au sein du tube central 5. Les tubes 4 sont coudés dans le sens de l'écoulement principal d'air, l'axe du coude forme avec l'axe du tube entrant dans la chambre un angle optimisé de façon à permettre l'injection du gaz tangentiellement à l'air. La position de l'injecteur au sein du tube central, c'est-à-dire la distance entre la sortie du gaz et la paroi du tube de combustion est essentielle. L'objectif est en effet d'injecter le gaz dans le flux d'air tout en permettant sa dilution optimale afin d'assurer le caractère « flameless » de la combustion. Si la distance avec la paroi est trop grande, une combustion avec flamme va se produire, si la distance avec la paroi est trop faible, la combustion est incomplète ou nécessite une longueur du tube de combustion excessive. De plus, le diamètre intérieur du tube d'injection est optimisé afin d'assurer une vitesse d'éjection du gaz combustible suffisante pour obtenir un mélange rapide avec l'air ambiant. En pratique, on s'assure que les vitesses d'éjection du gaz et de l'air ambiant sont très proches.

La quantité de mouvement élevée de l'air mis en rotation favorise une dilution du gaz combustible. L'air porté à une température au-delà de 800°C produit l'auto-combustion du gaz combustible.

La combustion se produit probablement dans les zones de cisaillement situées en proche paroi (couches limites). Etant donné le fort taux de dilution du gaz dans l'air, la combustion s'avère être « flameless », c'est-à-dire qu'elle ne présente pas de front de flamme ou de pic de température conduisant à la production de NOx thermiques. Il s'ensuit dès lors une combustion très propre.

Les gaz de combustion sont évacués par des tubes 13 localisés à l'opposé de l'entrée du tube de combustion 8, ceux-ci débouchent sur une zone annulaire 14 connectée au distributeur de la turbine (non représenté).

De nombreuses simulations numériques de l'écoulement et de la combustion réalisées avec le logiciel Fluent (Ansys, Canonsburg PA, USA), qui est un logiciel de simulation par éléments finis et volumes finis en mécanique des fluides. Ces calculs ont permis de mettre en évidence le caractère « flameless » de la combustion puisqu'aucun pic de température au-delà de 1350 K n'a été détecté. Les calculs ont été réalisés avec les techniques les plus modernes actuelles en utilisant des modèles de combustion simple du type « Eddy Dissipation Finite Rate à une équation de réaction » jusqu'à des modèles beaucoup plus sophistiqués du type EDC avec cinétique GRI 2.11. Le modèle PDF a également été appliqué avec les mêmes conclusions.

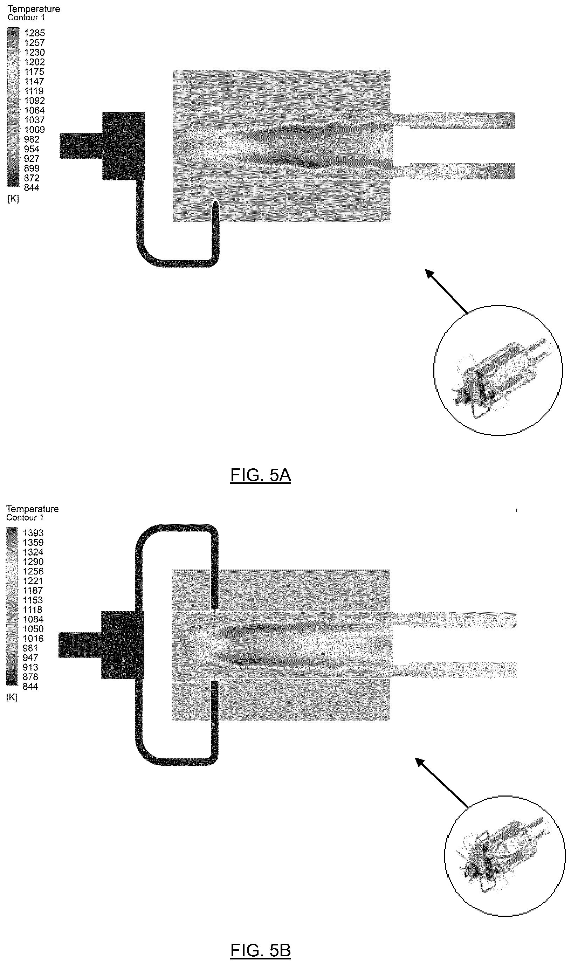

La combustion « flameless » s'avère également stable vis-à-vis de variation de débit massique. En effet des calculs réalisés avec + ou - 10% de débit par rapport au débit nominal n'impacte pas le régime de combustion (voir figures 5A et 5B respectivement pour une injection de gaz dans la chambre de combustion respectivement avec 5 tubes tangents et 10 tubes perpendiculaires à injection coudée).

### Récupérateur de chaleur

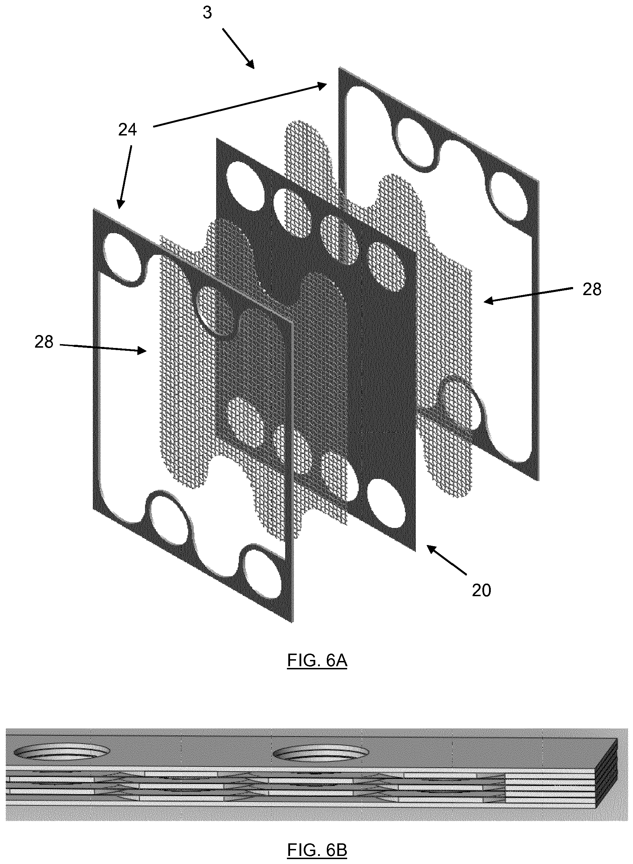

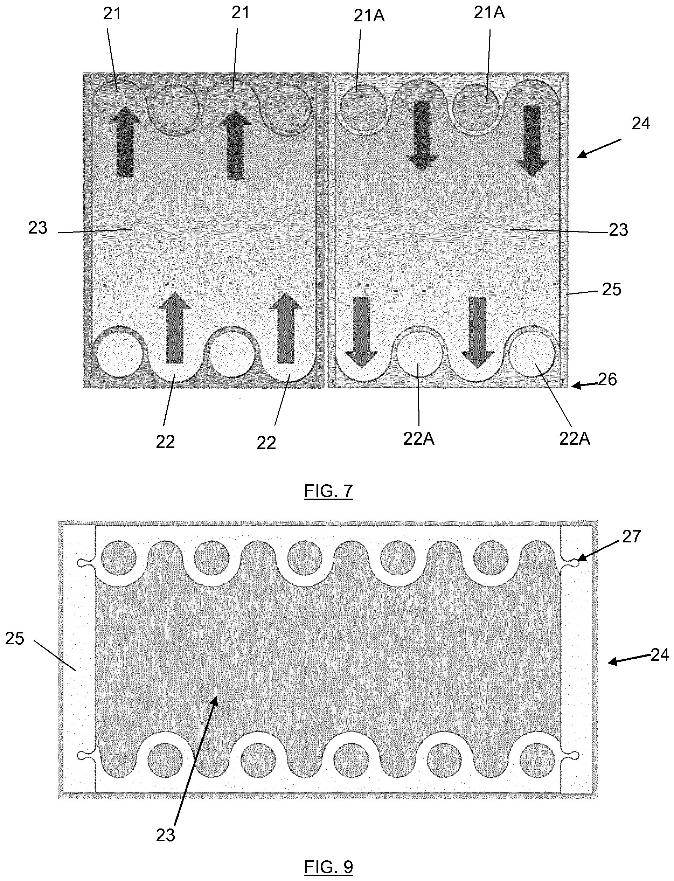

D'autre part, le récupérateur de chaleur 3 présente également une géométrie nouvelle. Afin d'assurer un transfert de chaleur optimum avec une perte de charge minimale, les inventeurs ont opté pour une configuration avec flux froids et chauds circulant à contre-courant, formée de zones froides et chaudes 23 alternées selon l'épaisseur du récupérateur 3. Les zones de fluides « chauds » et « froids » 23 sont en contact thermique par une feuille métallique très mince 20 (figures 6A, 6B et 7). Sur la figure 7, dans la zone de gauche, un écoulement froid entre dans la zone, se réchauffe et sort de la zone, dans le sens des flèches. Dans la zone de droite (adjacente), un écoulement chaud entre dans la zone, se refroidit et sort de la zone, dans le sens des flèches.

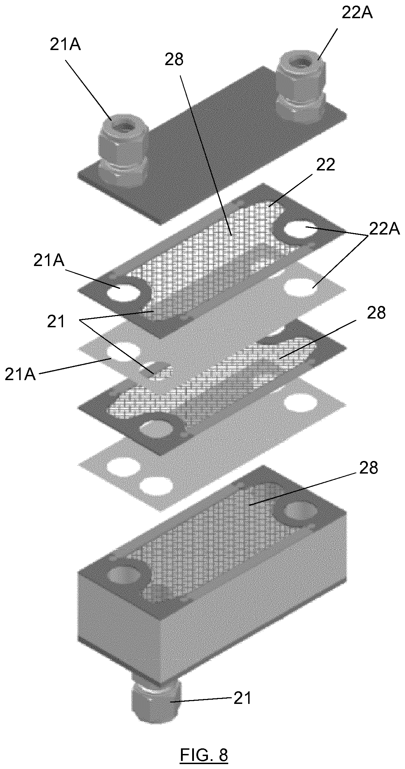

L'écoulement est dirigé au sein de chaque zone 23 par des collecteurs ou entrées-sorties de forme circulaire 21, 22 (figure 8). Comme représenté sur la figure 7, les zones de fluide 23 sont délimitées par des cadres dits de distribution 24. Les cadres sont formés par l'assemblage des zones de collecteurs 21, 22 et de montants latéraux 25. Afin de positionner l'ensemble aisément, les zones de collecteurs 21, 22 et les montants latéraux 25 disposent soit d'une encoche 26 (figure 7) ou d'une attache de type « puzzle » 27 (figure 9). L'avantage d'assembler les cadres 24 par éléments permet de réduire fortement les pertes de matière comparativement à l'usinage des cadres hors tôle. L'empilement alterné de cadres de distribution 24 séparés par des feuilles très minces 20 forme l'ossature de l'échangeur 3.

Selon une modalité particulièrement avantageuse de l'invention, chaque cadre 24 comporte, sur chacun de deux côtés parallèles du cadre 24, une zone de collecteurs locaux 21, 22, ondulée de manière à présenter des orifices 21, 22 ouverts sur la partie creuse du cadre alternant avec des orifices respectifs 21A, 22A fermés (par de la matière du cadre), de sorte que deux zones de fluide 23 adjacentes soient parcourues par des fluides respectifs « chaud » et « froid » et à contre-courant (figure 7).

Le dessin géométrique des zone de collecteurs, prévu toujours avec un nombre pair d'entrées et sorties 21, 22 positionnées de manière alternée selon une direction transverse à l'écoulement dans la zone de fluide, permet d'utiliser le même cadre pour toutes les zones de fluide 23. Deux cadres superposés adjacents dans l'échangeur sont obtenus par simple effet symétrique « en miroir » du même cadre, ce qui simplifie la fabrication qui se limite donc à un seul type ou dessin de cadre.

La distribution par les entrées circulaires 21, 22 permet de contrôler parfaitement la distribution du fluide dans l'échangeur et d'obtenir un motif d'écoulement parfaitement répétable (figure 7). Ce motif répétable peut être utilisé pour construire des échangeurs modulaires avec un nombre d'entrées et de sorties quelconques, par exemple pour un motif à 2 entrées et à 2 sorties (figure 7), pour un motif à une entrée et une sortie (figure 8), un motif à 5 entrées et 5 sorties (figure 9), etc.

Afin de s'assurer que les feuilles de séparation fines 20 ne se déforment sous l'effet de la pression différentielle entre les zones chaudes et froides, un treillis métallique 28 présentant une maille d'ouverture optimisée et dont les fils ont de préférence un diamètre égal à la moitié de l'épaisseur de la zone fluide est inséré dans la zone fluide 23 (voir figure 8). L'impact du treillis métallique 28 sur les pertes de charge ou sur le transfert de chaleur s'avère négligeable dans les conditions d'écoulement laminaire.

Les différents éléments métalliques de l'échangeur peuvent être assemblés par différentes techniques de soudage. Le soudage au laser et le soudage par diffusion (diffusion bonding) ont été testés dans le cadre de la présente invention.

Les matériaux envisagés par la réalisation de l'échangeur sont des métaux résistants à haute température à la corrosion due à l'effet des gaz de combustion. Via la température de fonctionnement du récupérateur (Tmax à 800°C), on préconise de préférence des aciers à très haute teneur en Cr et Ni ou des alliages spéciaux ou à base nickel.

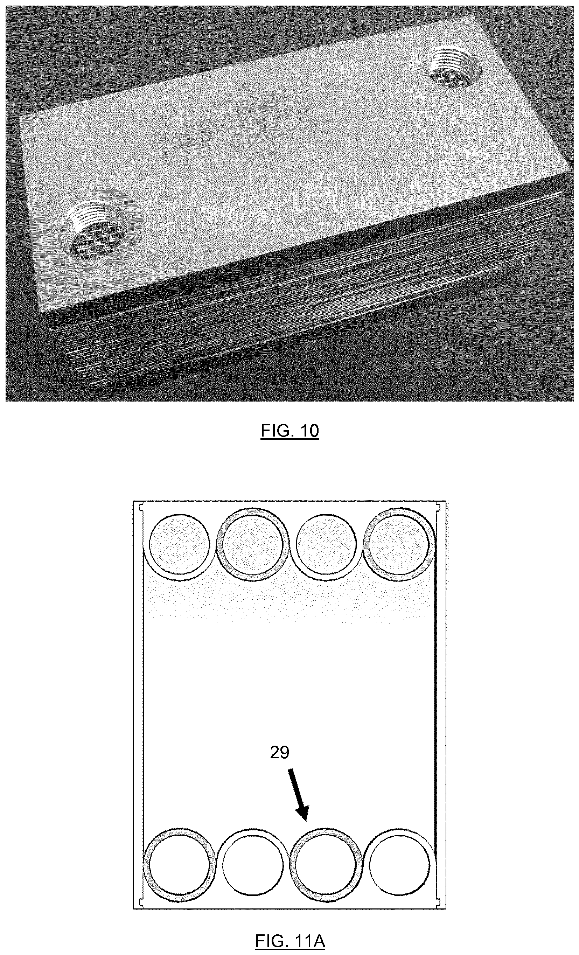

Il est connu que le « diffusion bonding » est une technique de soudage sous vide qui permet, par une pression importante sur les éléments à haute température (1000°C), de créer une adhésion entre les pièces par diffusion atomique. Ce procédé a été appliqué avec succès sur les pièces utilisées dans le cadre de l'invention (figure 10). Pour appliquer ce procédé, les zones de collecteurs et les montants latéraux doivent présenter une largeur suffisante pour permettre le transfert de la pression (sans fluage ou flambage excessif) et également assurer que la zone de contact de diffusion soit suffisante.

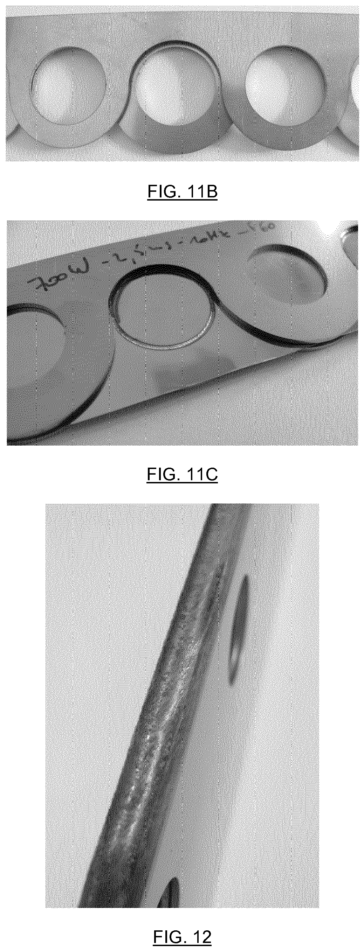

Comme indiqué ci-dessus, le soudage au laser peut également être utilisé. La difficulté principale réside dans le soudage de la feuille métallique de séparation de très faible épaisseur avec les cadres ayant une épaisseur beaucoup plus forte. Chaque feuille de séparation est d'abord soudée sur les plaques de distribution, une soudure circulaire étant réalisée au niveau de chaque trou fermé de la plaque de distribution. Les zones ouvertes ainsi créées sont empilées. La forme particulière de l'ondulation des plaques de distribution permet de créer un épaulement suffisant pour réaliser le soudage des feuilles de séparation sur la plaque inférieure (figures 11A, 11B et 11C). La soudure se fait toujours avec la plaque de distribution au-dessus de la feuille de séparation. Une fois la soudure effectuée, on retourne l'ensemble, de manière à présenter la feuille de séparation vers le haut. On soude alors par-dessus la plaque de distribution suivante et ainsi de suite. L'ensemble est finalement scellé par l'ajout de plaques inférieures et supérieures de plus forte épaisseur afin d'assurer la rigidité de globale sous pression et soudé sur la tranche (figure 12) afin d'assurer l'étanchéité complète de l'échangeur. Le même principe est également appliqué pour le soudage par diffusion.

De nombreuses simulations numériques 3D prenant en compte les écoulements et des transferts thermiques couplés au sein de l'échangeur ont été réalisés en utilisant le logiciel Fluent.

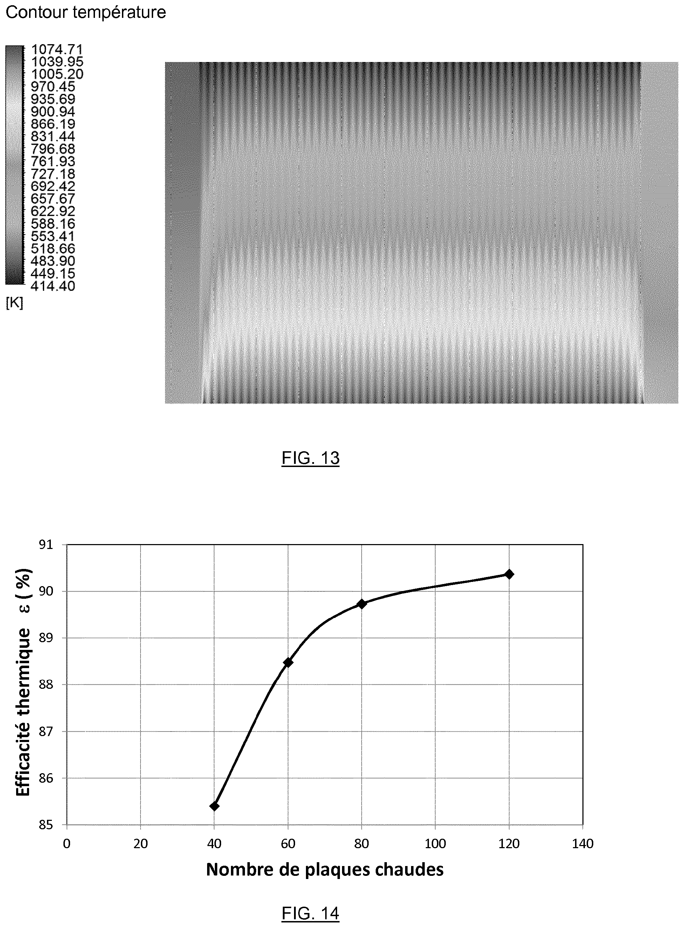

La figure 13 présente les résultats d'un calcul d'écoulement au sein d'un échangeur présentant 60 zones froides et 60 zones chaudes alternées, soit 120 zones au total. L'influence des paques de fermeture de l'échangeur est perceptible mais affecte peu l'efficacité théorique.

A débit massique constant, le choix du nombre de zones (froides et chaudes) a une influence significative sur la performance de l'échangeur, de même que l'épaisseur de chaque zone, comme l'indiquent les résultats de calcul de la figure 14 qui montre l'évolution de l'efficacité thermique en fonction du nombre de zones chaudes et froides pour un échangeur à 5 entrées et 5 sorties. L'épaisseur de zone est fixée ici à 1 mm et l'épaisseur des plaques de séparation est de 100 microns.

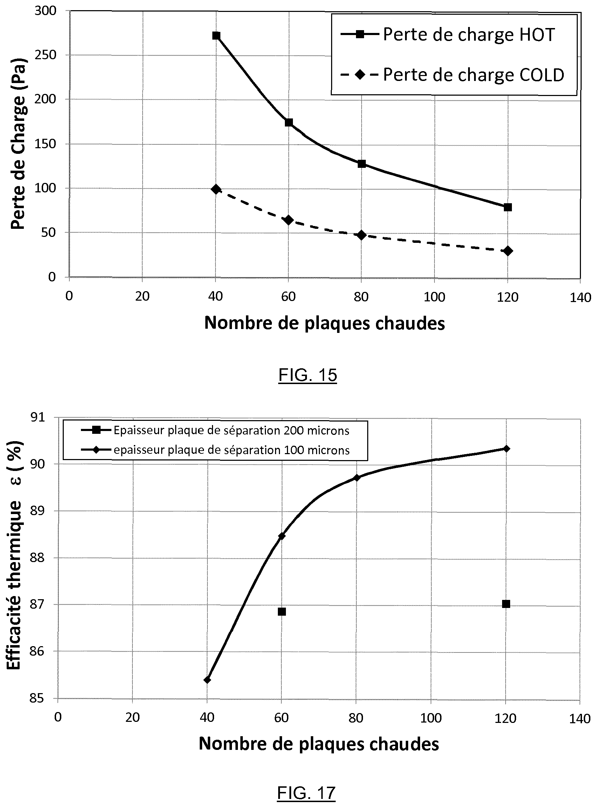

Afin de minimiser les pertes de charges dans l'échangeur, tout en s'assurant d'une performance suffisante, on a opté pour l'établissement d'un régime laminaire. La figure 15 montre l'évolution de la perte de charge en fonction du nombre de zones dans les mêmes conditions que pour la figure 14. Ainsi la vitesse de l'écoulement dans l'échangeur est limitée à quelques mètres par seconde. Par ailleurs, l'épaisseur de la zone fluide a également une importance considérable sur l'échange de chaleur, une valeur trop élevée nécessitant un allongement de l'échangeur pour atteindre l'efficacité maximale et une valeur trop faible produisant une augmentation des pertes de charges.

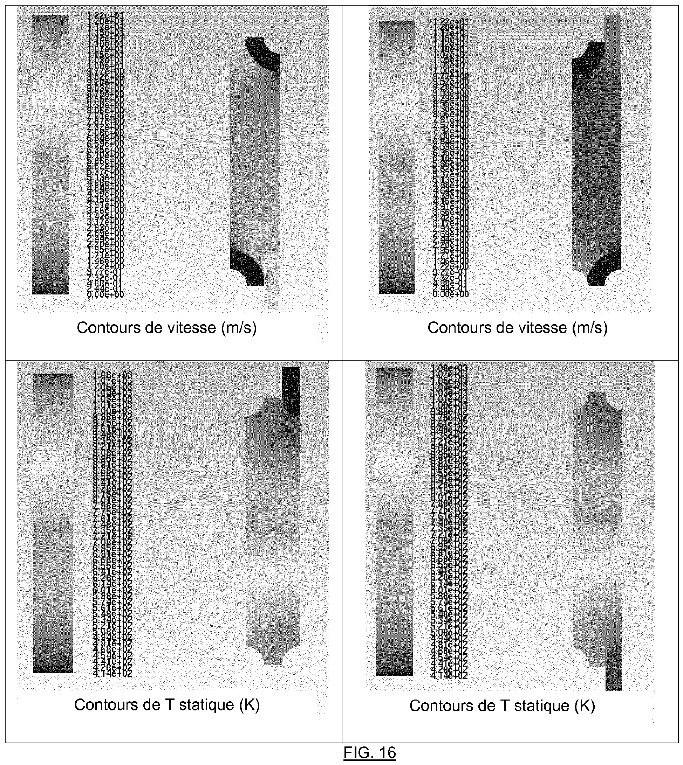

La figure 16 montre un calcul CHT dans les zones fluides de l'échangeur (coupes comme dans la figure 7).

L'épaisseur de la feuille de séparation entre zones fluides a également une influence considérable sur le transfert de chaleur. En effet, plus l'épaisseur est élevée, plus la conduction axiale dans cette feuille est important au détriment de l'efficacité thermique de l'échangeur. La figure 17 montre l'évolution de l'efficacité thermique en fonction du nombre de zones chaudes (zones froides) pour un échangeur à 5 entrées et 5 sorties (épaisseur de zone fixée à 1 mm.) avec l'influence de l'épaisseur de la feuille de séparation.

La présente invention peut être exécutée selon différentes formes d'exécution préférées pour le récupérateur de chaleur avec différentes formes d'assemblage de plaques. Le récupérateur pourrait être assemblé par des techniques alternatives tels que le diffusion bonding comme mentionné ci-dessus (cf. article de revue « High temperature heat exchanger studies for applications to gas turbines », June Kee Min, Ji Hwan Jeong, Man Yeong Ha, Kui Soon Kim, Heat Mass Transfer (2009) 46:175-186).

Le document WO 2012/112514 A1 divulgue un appareil de cogénération d'énergie comprenant une micro-turbine ayant une chambre de combustion cylindrique du type « à vortex », et au moins un récupérateur-échangeur de chaleur. Ce document diffère de l'invention en ce que des tubes d'injection de gaz combustible sont disposés au niveau du tube central, et en ce que la sortie pour les gaz de combustion a une forme annulaire.

Le document US 3 831 374 A montre une turbine à gaz ayant un échangeur de chaleur et une sortie annulaire de gaz de combustion, mais il ne décrit ni des tubes d'injection de gaz combustible disposés au niveau du tube central, ni de fentes orientées pour créer une rotation "à vortex" dans la chambre de combustion.

Chaque composant élémentaire de l'échangeur de chaleur a une forme très simple et compacte, parallélépipédique, qui permet aussi une connexion simple aux collecteurs. Il se compose d'une alternance de cadres fermés renfermant un treillis soudé au cadre et de feuilles métalliques fines de séparation des zones de fluide. Ces éléments sont agencés de manière à assurer une étanchéité vis-à-vis de l'extérieur. Le but des cadres et des treillis est d'assurer une fonction de séparation ou d'écartement entre les zones de l'échangeur.

Dans certains documents de l'état de l'art (WO 02/063231 A1, WO 2013/124054 A1), on divulgue des échangeurs plus compliqués ou plus difficiles à réaliser, sous forme annulaire ou en spirale. Parfois ces échangeurs comportent un treillis qui baigne dans le flux de fluide mais ce treillis n'a pas nécessairement une fonction d'espacement entre zones comme dans la présente invention.

Dans WO 2012/141793 A1, US 4,843,693 A et JP-57187594 A, on utilise une structure de treillis pour accroître le transfert de chaleur ou augmenter le taux de turbulence, ce qui n'est pas l'objet du treillis dans la présente invention. WO 2011/137522 A1 présente une technique pour créer un composant d'échangeur de chaleur utilisant deux faces et un treillis et fermé latéralement par un dépôt de métal, alors que dans la présente invention le treillis est placé et soudé dans un cadre métallique.

Dans certains documents, on fait état de l'existence d'éléments séparateurs pour les composants de l'échangeur de chaleur (EP 1 733 822 B1, NL 1027640 C2, FR 1 246 571) mais sans la notion de cadre et d'éléments de fermeture extérieurs permettant d'assurer une étanchéité. Dans WO 2005/19754 A1, les séparateurs des plaques d'échangeur sont a priori créés sous la forme de déformation ou d'ondulation des plaques elles-mêmes. Dans WO 91/02209, on fait mention d'un maillage de séparation de faces pour un échangeur réalisé en matière thermoplastique.

Dans FR 1 519 235, il existe un système de cadre, feuilles, treillis mais sous une forme très différente et assemblée de manière différente par rapport à la présente invention.

En ce qui concerne les chambres de combustion, l'état de la technique (par exemple CN 103032891 A, WO 2010/128964 A1, US7003961, CN 102384473 B, WO 01/11215 A1) fait mention de techniques à vortex, multi-vortex, flameless ou à oxydation sans flamme, etc. mais avec un sens d'écoulement giratoire des gaz perpendiculaire à l'écoulement, au contraire de la présente invention où le vortex d'écoulement est perpendiculaire à l'axe de la chambre de combustion.

Le document US 3,810,732 A préconise l'utilisation de parois perforées pour réaliser le mélange et une combustion sans flamme, ce qui est totalement différent de la présente invention.

La différence entre le mode de combustion « flameless » selon l'invention et les systèmes de combustion à pré-mélange pauvre (« lean-premixed ») (WO 2009/121776 A1, etc.) est que le premier nécessite un préchauffage de l'air d'oxydation afin de permettre un autoallumage du mélange, ce qui n'est pas le cas dans le « lean premixed », celui-ci étant dans un état de limite d'extinction car l'apport d'air supplémentaire par rapport au mélange stoechiométrique (x2) a tendance à éteindre la flamme.

Le système de micro-turbine à gaz récupéré fonctionnant avec une combustion en mode flameless selon WO 2013/66432 A1 et WO 2013/66433 A1, ne comporte pas de chambre de combustion comme dans l'invention mais une céramique poreuse portée à haute température afin de permettre l'autoallumage du mélange.

Dans WO 2007/115989 A1, on retrouve une idée similaire à la mise en rotation de l'écoulement dans la chambre de combustion comme dans l'invention, avec comme objectif d'obtenir un pré-mélange. Mais la configuration selon l'invention présente l'avantage d'être plus simple, les entrées d'air étant de simples fentes orientées.

Dans EP 1 731 833 A1, la chambre de combustion est annulaire, dans US 3,012,402 A, la chambre de combustion est en forme de spirale, dans US 7,127,897 B2, la combustion est de type à vortex dans une chambre toroïdale. La chambre cylindrique à vortex de l'invention est donc plus simple.

Le document US 8,695,350 B2 propose le principe de la combustion CDC (colorless distributed combustion), avec une recirculation des gaz de combustion mais qui est différent du principe de l'invention.

Dans US 5,479,781 A, malgré des similitudes comme la création d'un vortex selon l'axe de la chambre, l'air n'est pas acheminé via une zone annulaire périphérique avec des fentes orientées comme dans l'invention.

### Liste des symboles de référence

- 1: Chambre de combustion
- 2: Brûleur
- 3: Échangeur de chaleur
- 4: Gicleur à gaz
- 5: Tube central
- 6: Orifice d'entrée d'air préchauffé
- 7: Zone annulaire
- 8: Zone de combustion
- 10: Base de la zone annulaire
- 11: Autre extrémité de la zone annulaire
- 12: Fente profilée d'admission d'air
- 13: Tube de sortie des gaz de combustion
- 14: Zone annulaire connectée à la turbine
- 20: Feuille métallique mince d'échangeur
- 21: Zone de collecteur circulaire
- 21A: Orifice circulaire fermé
- 22: Zone de collecteur circulaire
- 22A: Orifice circulaire fermé
- 23: Zone de fluide froide/chaude
- 24: Cadre de distribution
- 25: Montant latéral
- 26: Encoche
- 27: Attache « puzzle »
- 28: Treillis métallique
- 29: Soudure circulaire

## Revendications

1. Appareil de cogénération d'énergie comprenant une microturbine à gaz alimentée par une chambre de combustion (1) du type « à vortex » pour réaliser un régime de combustion du type « flameless » et avec au moins un récupérateur-échangeur de chaleur (3) pour le préchauffage d'air comburant comprimé issu d'un compresseur de la microturbine, avant l'injection de cet air préchauffé dans la chambre de combustion (1), la chambre de combustion (1) comprenant essentiellement une chambre cylindrique (2) comportant :
- un tube central (5) tel que l'air préchauffé est introduit à une première extrémité de la chambre (10) dans une première zone annulaire (7) située entre la paroi externe de la chambre cylindrique (2) et le tube central (5) ;
- à une seconde extrémité de la chambre (11), des fentes orientées (12) et des tubes d'injection de gaz combustible (4) au niveau du tube central (5), lesdites fentes orientées (12) et lesdits tubes d'injection de gaz combustible (4) étant disposés de manière, d'une part, à mettre en rotation rapide l'air préchauffé introduit via lesdites fentes (12) à l'intérieur du tube central (5) selon un vortex d'écoulement parallèle à l'axe de la chambre de combustion (2) et, d'autre part, à assurer le mélange intime de l'air préchauffé, du gaz combustible et des gaz de combustion à l'intérieur du tube central (5) au niveau d'une zone principale et centrale de combustion (8);
- une sortie annulaire (14) pour les gaz de combustion située au niveau du tube central (5) à la première extrémité (10) de la chambre (2) et connectée à un distributeur de la turbine.

2. Appareil selon la revendication 1, **caractérisé en ce que** les tubes d'injection de gaz combustible (4) au niveau du tube central (5) sont tangentiels à la paroi du tube central (5).

3. Appareil selon la revendication 1, **caractérisé en ce que** l'air préchauffé est introduit à la première extrémité de la chambre de combustion cylindrique (10) par une pluralité d'orifices de communication (6) entre le récupérateur (3) et la chambre (2).

4. Appareil selon la revendication 1, **caractérisé en ce qu'**il comporte quatre récupérateurs-échangeurs (3) de forme parallélépipédique disposés sous forme d'une croix, chacun de ceux-ci communiquant avec la chambre de combustion (2) via une partie desdits orifices de communication (6).

5. Appareil selon la revendication 1, **caractérisé en ce que** les gaz de combustion se trouvant dans le tube central débouchent dans la sortie annulaire (14) par une pluralité de tubes équidistants (13).

6. Appareil selon la revendication 1, **caractérisé en ce que** chaque récupérateur de chaleur (3) comporte une pluralité de zones de fluide (23) chaudes et froides alternées sur l'épaisseur du récupérateur (3) et dans lesquelles le fluide circule à contre-courant, lesdites zones (23) étant en contact thermique deux à deux via une feuille métallique mince de séparation (20), l'écoulement de fluide étant dirigé au sein de chaque zone par des collecteurs circulaires (21, 22).

7. Appareil selon la revendication 6, **caractérisé en ce que** l'épaisseur de la feuille métallique mince de séparation (20) est comprise entre 50 et 250 microns.

8. Appareil selon la revendication 6, **caractérisé en ce que** les zones de fluide (23) sont délimitées par des cadres de distribution (24) formés par l'assemblage de zones de collecteurs (21, 22) et de montants latéraux (25).

9. Appareil selon la revendication 8 **caractérisé en ce que** chaque cadre (24) comporte, sur chacun de deux côtés parallèles du cadre (24), une zone de collecteurs locaux (21, 22), ondulée de manière à présenter successivement des orifices (21, 22) ouverts sur la partie creuse du cadre alternant avec des orifices respectifs (21A, 22A) fermés par de la matière du cadre, de sorte que deux zones de fluide (23) adjacentes soient parcourues par les fluides respectifs « chaud » et « froid » et à contre-courant.

10. Appareil selon la revendication 8, **caractérisé en ce que** chaque zone de collecteurs possède un nombre pair d'entrées-sorties circulaires (21, 22) positionnées de manière alternée selon une direction transverse par rapport à l'écoulement.

11. Appareil selon la revendication 8, **caractérisé en ce que** les zones de collecteurs (21, 22) et les montants latéraux (25) sont munis d'un système d'attaches complémentaires du type encoche (26), tenon-mortaise ou puzzle (27) permettant l'assemblage du récupérateur (3).

12. Appareil selon la revendication 9, **caractérisé en ce que** le récupérateur (3) est constitué par l'empilement alterné de cadres de distribution (24) de dessins identiques mais retournés à 180° l'un par rapport au suivant, ou positionnés de sorte que l'un est l'image de l'autre dans un miroir, deux cadres adjacents (24) étant séparés par une feuille métallique pleine mince (20), chaque feuille pleine mince (20) étant pourvue sur deux côtés parallèles d'orifices fermés (21, 22, 21A, 22A) correspondant aux orifices précités respectivement ouverts (21, 22) et fermés (21A, 22A) des cadres de distribution(24).

13. Appareil selon la revendication 6, **caractérisé en ce qu'**un treillis métallique (28) est inséré dans chaque cadre de distribution 24, dont les fils ont un diamètre d'environ la moitié de l'épaisseur de la zone de fluide (23) correspondante.

14. Appareil selon la revendication 6, **caractérisé en ce que** les éléments métalliques du récupérateur (3) sont réalisés dans des aciers à très haute teneur en chrome ou nickel, en alliages spéciaux ou en alliages à base nickel.

15. Appareil selon la revendication 12, **caractérisé en ce que** les cadres de distribution (24) sont soudés aux feuilles de séparation (20) au laser ou par diffusion.

16. Appareil selon la revendication 15, **caractérisé en ce que** chaque feuille de séparation (20) est soudée sur un cadre de distribution (24), une soudure circulaire étant réalisée au niveau de chaque orifice fermé (21A, 22A) de la feuille de séparation (20), selon un épaulement (29) créé par l'ondulation correspondante (21, 22) du cadre de distribution (24), lorsque le cadre de distribution (24) est superposé à la feuille de séparation (20).

17. Appareil selon la revendication 6, **caractérisé en ce que** l'ensemble du récupérateur (3) est finalement scellé par l'ajout de plaques inférieure et supérieure de plus forte épaisseur avec réalisation de soudure sur la tranche du récupérateur (3).

18. Utilisation d'un appareil de cogénération d'énergie selon la revendication 1, **caractérisée en ce que** l'air préchauffé est mis en rotation dans la zone de combustion avec une vitesse de l'ordre de 50 m/s et porté à une température supérieure à 800°C pour produire une auto-combustion sans flamme du gaz combustible.

## Patentansprüche

1. Gerät zur Kraft-Wärme-Kopplung von Energie, umfassend eine Gasmikroturbine, die durch eine Brennkammer (1) vom Typ "mit Wirbel" versorgt wird, um eine Verbrennungsform vom Typ "flameless" durchzuführen, und mit mindestens einer Wärmespeicher/-rückgwinnungseiheit (3), für die Vorerhitzung von komprimiertem Luft-Kraftstoff, der aus einem Kompressor der Mikroturbine stammt, vor dem Einspritzen dieser vorherhitzen Luft in die Verbrennungskammer (1), wobei die Verbrennungskammer (1) im Wesentlichen eine zylindrische Kammer (2) aufweist, umfassend:
- ein zentrales Rohr (5), so dass die vorerhitzte Luft in ein erstes Ende der Kammer (10) in eine erste ringförmige Zone (7) eingeführt wird, die sich zwischen der externen Wand der zylindrischen Kammer (2) und dem zentralen Rohr (5) befindet,
- an einem zweiten Ende der Kammer (11) ausgerichtete Schlitze (12) und Rohre zum Einspritzen von Brenngas (4) auf dem Niveau des zentralen Rohrs (5), wobei die ausgerichteten Schlitze (12) und die Rohre zum Einspritzen von Brenngas (4) derart angeordnet sind, dass sie einerseits die vorerhitzte Luft, die über die Schlitze (12) in das Innere des zentralen Rohrs (5) eingeführt wird, gemäß einem Abflusswirbel parallel zur Achse der Brennkammer (2) in schnelle Drehung zu versetzen, und andererseits eine enge Mischung der vorerhitzten Luft, des Brenngases und der Verbrennungsgase im Inneren des zentralen Rohrs (5) auf dem Niveau einer Haupt- und Zentralverbrennungszone (8) sicherstellen;
- einen ringförmigen Ausgang (14) für die Verbrennungsgase, der sich auf dem Niveau des zentralen Rohrs (5) am ersten Ende (10) der Kammer (2) und verbunden mit einem Verteiler der Turbine befindet.

2. Gerät nach Anspruch 1, **dadurch gekennzeichnet, dass** die Rohre zum Einspritzen von Brenngas (4) auf dem Niveau des zentralen Rohrs (5) tangential zur Wand des zentralen Rohrs (5) sind.

3. Gerät nach Anspruch 1, **dadurch gekennzeichnet, dass** die vorerhitzte Luft in das erste Ende der zylindrischen Brennkammer (10) durch eine Vielzahl von Kommunikationsöffnungen (6) zwischen der Rückgwinnungseinheit (3) und der Kammer (2) eingeführt wird.

4. Gerät nach Anspruch 1, **dadurch gekennzeichnet, dass** es vier Rückgwinnungs-Tauschereinheiten (3) mit parallelepipeder Form umfasst, die in Form eines Kreuzes angeordnet sind, wobei jedes derselben mit der Brennkammer (2) über einen Teil der Kommunikationsöffnungen (6) kommuniziert.

5. Gerät nach Anspruch 1, **dadurch gekennzeichnet, dass** sich die Verbrennungsgase im zentralen Rohr befinden, das im ringförmigen Ausgang (14) durch eine Vielzahl von gleich weit entfernten Rohren (13) mündet.

6. Gerät nach Anspruch 1, **dadurch gekennzeichnet, dass** jede Wärmerückgewinnungseinheit (3) eine Vielzahl von heißen und kalten Fluidzonen (23) umfasst, die auf der Dicke der Rückgewinnungseinheit (3) alternieren, und in denen das Fluid gegen den Strom zirkuliert, wobei die Zonen (23) paarweise in thermischem Kontakt über eine dünne metallische Trennfolie (20) stehen, wobei der Abfluss von Fluid im Inneren jeder Zone von kreisförmigen Kollektoren (21, 22) geleitet wird.

7. Gerät nach Anspruch 6, **dadurch gekennzeichnet, dass** die Dicke der dünnen metallischen Trennfolie (20) im Bereich zwischen 50 und 250 Mikrometer liegt.

8. Gerät nach Anspruch 6, **dadurch gekennzeichnet, dass** die Fluidzonen (23) von Verteilungsrahmen (24) begrenzt sind, die durch die Montage von Kollektorzonen (21, 22) und seitlichen Pfosten (25) gebildet sind.

9. Gerät nach Anspruch 8, **dadurch gekennzeichnet, dass** jeder Rahmen (24) auf jeder von zwei parallelen Seiten des Rahmens (24) eine Zone von lokalen Kollektoren (21, 22) umfasst, die gewellt sind, um aufeinanderfolgend Öffnungen (21, 22) aufzuweisen, die auf dem hohlen Teil des alternierenden Rahmens offen sind, wobei entsprechende Öffnungen (21A, 22A) von Material des Rahmens geschlossen sind, so dass zwei benachbarte Fluidzonen (23) von den entsprechenden "heißen" und "kalten" Fluiden und gegen den Strom durchlaufen werden.

10. Gerät nach Anspruch 8, **dadurch gekennzeichnet, dass** jede Speicherzone eine gerade Anzahl von kreisförmigen Eingängen-Ausgängen (21, 22) umfasst, die auf alternierende Weise gemäß einer Querrichtung mit Bezug auf den Abfluss positioniert sind.

11. Gerät nach Anspruch 8, **dadurch gekennzeichnet, dass** die Kollektorzonen (21, 22) und die seitlichen Pfosten (25) mit einem zusätzlichen System von Befestigungen vom Typ Nut (26), Zapfenverbindung oder Puzzle (27) ausgestattet sind, die die Montage der Rückgewinnungseinheit (3) ermöglichen.

12. Gerät nach Anspruch 9, **dadurch gekennzeichnet, dass** die Rückgewinnungseinheit (3) durch die alternierende Stapelung von Verteilungsrahmen (24) mit identischen Mustern, jedoch um 180° mit Bezug auf das Folgende gedreht oder derart positioniert gebildet sind, dass einer das Spiegelbild des anderen ist, wobei zwei benachbarte Rahmen (24) durch eine dünne volle Metallfolie (20) getrennt sind, wobei jede dünne volle Folie (20) auf zwei parallelen Seiten mit geschlossenen Öffnungen (21, 22, 21A, 22A) versehen ist, die den oben angegebenen jeweils offenen (21, 22) und geschlossenen (21A, 22A) Öffnungen der Verteilungsrahmen (24) entsprechen.

13. Gerät nach Anspruch 6, **dadurch gekennzeichnet, dass** ein metallisches Gitter (28) in jeden Verteilungsrahmen 24 eingeführt ist, von dem die Drähte einen Durchmesser von ungefähr der Hälfte der Dicke der entsprechenden Fluidzone (23) aufweisen.

14. Gerät nach Anspruch 6, **dadurch gekennzeichnet, dass** die metallischen Elemente der Rückgewinnungseinheit (3) aus Stahl mit sehr hohem Chrom- oder Nickelgehalt, aus Speziallegierungen oder aus Legierungen auf der Grundlage von Nickel hergestellt sind.

15. Gerät nach Anspruch 12, **dadurch gekennzeichnet, dass** die Verteilungsrahmen (24) an die Trennfolien (20) mit Laser oder durch Diffusion geschweißt sind.

16. Gerät nach Anspruch 15, **dadurch gekennzeichnet, dass** jede Trennfolie (20) auf einen Verteilungsrahmen (24) geschweißt ist, wobei eine kreisförmige Schweißung auf dem Niveau jeder geschlossenen Öffnung (21A, 22A) der Trennfolie (20) gemäß einem Absatz (29) durchgeführt ist, der durch die entsprechende Wellung (21, 22) des Verteilungsrahmens (24) erzeugt ist, wenn der Verteilungsrahmen (24) über die Trennfolie (20) gelagert ist.

17. Gerät nach Anspruch 6, **dadurch gekennzeichnet, dass** die Rückgewinnungseinheit (3) schließlich durch die Hinzufügung einer unteren und oberen Platte mit größerer Dicke mit Durchführung der Schweißung auf der Scheibe der Rückgewinnungseinheit abgedichtet ist.

18. Verwendung eines Geräts zur Kraft-Wärme-Kopplung nach Anspruch 1, **dadurch gekennzeichnet, dass** die vorerhitzte Luft in einem Verbrennungsbereich mit einer Geschwindigkeit im Bereich von 50 m/s in Drehung versetzt und auf eine Temperatur von mehr als 800 °C gebracht wird, um eine Selbstverbrennung ohne Flamme des Brenngases zu erzeugen.

## Claims

1. A cogeneration apparatus comprising a gas microturbine supplied by a combustion chamber (1) of the "vortex" type to produce a combustion regime of the "flameless" type and with at least one heat recovery unit-exchanger (3) for preheating compressed oxidizing air from a compressor of the microturbine, before the injection of this preheated air into the combustion chamber (1), the combustion chamber (1) essentially comprising a cylindrical chamber (2) including:
- a central tube (5), such that the preheated air is introduced at a first end of the chamber (10) in a first annular zone (7) situated between the outer wall of the cylindrical chamber (2) and the central tube (5);
- at a second end of the chamber (11), oriented slits (12) and fuel gas injection tubes (4) at the central tube (5), said oriented slits (12) and said fuel gas injection tubes (4) being positioned so as on the one hand to cause the preheated air introduced via said slits (12) inside the central tube (5) to rotate quickly following a flow vortex parallel to the axis of the combustion chamber (2) and, on the other hand, to ensure the close mixing of the preheated air, the fuel gas and the combustion gases inside the central tube (5) at a primary and central combustion zone (8);
- an annular outlet (14) for the combustion gases situated at the central tube (5) at the first end (10) of the chamber (2) and connected to a distributor of the turbine.

2. The apparatus according to claim 1, **characterized in that** the fuel gas injection tubes (4) at the central tube (5) are tangential to the wall of the central tube (5).

3. The apparatus according to claim 1, **characterized in that** the preheated air is introduced at the first end of the cylindrical combustion chamber (10) through a plurality of communication orifices (6) equidistant between the recovery unit (3) and the chamber (2).

4. The apparatus according to claim 1, **characterized in that** it includes four parallelepiped recovery units-exchangers (3) positioned in the form of a cross, each of them communicating with the combustion chamber (2) via part of said communication orifices (6).

5. The apparatus according to claim 1, **characterized in that** the combustion gases found in the central tube emerge in the annular outlet (14) through a plurality of equidistant tubes (13).

6. The apparatus according to claim 1, **characterized in that** each heat recovery unit (3) includes a plurality of hot and cold fluid zones (23) alternating over the thickness of the recovery unit (3) and in which the respective "hot" and "cold" fluids circulate countercurrent, said zones (23) being in thermal contact in pairs via a thin metal separating sheet (20), the fluid flow being oriented within each zone by circular collectors (21, 22).

7. The apparatus according to claim 6, **characterized in that** the thickness of the thin metal separating sheet (20) is comprised between 50 and 250 microns.

8. The apparatus according to claim 6, **characterized in that** the fluid zones (23) are defined by distributing frames (24) formed by the assembly of collector zones (21, 22) and lateral uprights (25).

9. The apparatus according to claim 8, **characterized in that** each frame (24) includes, on each of two parallel sides of the frame (24), a local collector zone (21, 22), corrugated so as to successively have open orifices (21, 22) on the hollow part of the frame alternating with respective orifices (21A, 22A) closed by the material of the frame, such that two adjacent fluid zones (23) are traveled by the respective "hot" and "cold" fluids and countercurrent.

10. The apparatus according to claim 8, **characterized in that** each collector zone has an even number of circular inlets-outlets (21, 22) positioned alternating along a transverse direction relative to the flow.

11. The apparatus according to claim 8, **characterized in that** the collector zones (21, 22) and the lateral uprights (25) are provided with a system of complementary fasteners of the notch (26), mortise and tenon or puzzle (27) type allowing the assembly of the recovery unit (3).

12. The apparatus according to claim 9, **characterized in that** the recovery unit (3) is made up of the alternating stack of distributing frames (24) with identical designs, but rotated by 180° relative to one another, or positioned such that one is the mirror image of the other, two adjacent frames (24) being separated by a thin solid metal sheet (20), each thin solid sheet (20) being provided on two parallel sides with closed orifices (21, 22, 21A, 22A) corresponding to the aforementioned opening (21, 22) and closing (21A, 22A) orifices, respectively, of the distributing frames (24).

13. The apparatus according to claim 6, **characterized in that** a metal mesh (28) is inserted in each distributing frame (24), the wires of which have a diameter of about half the thickness of the corresponding fluid zone (23).

14. The apparatus according to claim 6, **characterized in that** the metal elements of the recovery unit (3) are made from steels with a very high chrome or nickel content, special alloys or nickel-based alloys.

15. The apparatus according to claim 12, **characterized in that** the distributing frames (24) are welded to the separating sheets (20) by laser or by diffusion.

16. The apparatus according to claim 15, **characterized in that** each separating sheet (20) is welded on a lower distributing frame (24), a circular weld being done at each closed orifice (21A, 22A) of the separating sheet (20), according to a shoulder (29) created by the corresponding corrugation (21, 22) of the distributing frame (24), when the distributing frame (24) is superimposed on the separating sheet (20).

17. The apparatus according to claim 6, **characterized in that** the recovery unit assembly (3) is lastly sealed by adding thicker lower and upper plates, with welding on the edge of the recovery unit (3).

18. A use of a cogeneration apparatus according to claim 1, **characterized in that** the preheated air is rotated in the combustion zone with a speed of about 50 m/s and brought to a temperature above 800°C to produce flameless auto-combustion of the combustible gas.
